# FASCICULE DE BREVET EUROPEEN

(11) **EP 3 922 145 B1**
(45) Date de publication et mention de la délivrance du brevet: **02.07.2025**
(21) Numéro de dépôt: 21174553.4
(22) Date de dépôt: 18.05.2021
(51) Int. Cl.: A47J 27/00, A47J 36/16, A47J 43/07

(54) **APPAREIL DE CUISSON D'ALIMENTS COMPRENANT UNE CUVE DE CUISSON AMOVIBLE**
KOCHGERÄT FÜR LEBENSMITTEL, DAS EINEN HERAUSNEHMBAREN KOCHBEHÄLTER UMFASST
APPLIANCE FOR COOKING FOOD COMPRISING A REMOVABLE COOKING VESSEL

(30) Priorité: 19.05.2020 FR 2005049
(43) Date de publication de la demande: 15.12.2021
(73) Titulaire: SEB S.A., 69130 Ecully (FR)
(72) Inventeur: MUGNIER, Cédric, 21120 PICHANGES (FR); DUSSART, Marie, 21000 DIJON (FR); PETITALLOT, Johann, 21000 DIJON (FR); SEURAT, Frédéric, 21490 BRETIGNY (FR)
(74) Mandataire: SEB Développement

(56) Documents cités:
- EP-A1- 2 727 504
- EP-A2- 1 923 128
- WO-A1-2012/123464
- CN-A- 109 463 982
- FR-A1- 3 029 095

## Description

### Domaine technique de l'invention

La présente invention concerne de manière générale un appareil de cuisson, et en particulier, l'invention concerne un appareil de cuisson qui comprend notamment une cuve de cuisson et une pale de brassage des aliments à cuire dans la cuve de cuisson, de sorte à proposer un premier mode de fonctionnement avec la pale de brassage tournante dans la cuve de cuisson, et un deuxième mode de cuisson avec une cuve de cuisson sans pale de brassage pour cuire par exemple une tarte ou un gâteau.

### État de la technique

Il est connu dans l'art antérieur des dispositifs de cuisson, tels que celui décrit dans le document EP1978855B1 avec une cuve de cuisson et une pale de brassage amovible. En contrepartie, ce système présente notamment l'inconvénient de ne pas présenter de possibilité de faire cuire une tarte ou un gâteau dans la cuve de cuisson car cette dernière présente une protubérance centrale. Il est possible de palier à cet inconvénient en proposant un plateau à positionner dans la cuve de cuisson, mais cela conduit à réduire notablement le volume disponible dans l'espace de cuisson, ce qui limite les possibilités de cuisson de tarte ou de gâteau.

Le document FR3029095 au nom de la demanderesse décrit un appareil de cuisson d'aliments comprenant une cuve de cuisson d'aliments et une pale de brassage, des moyens d'entrainement agencés pour s'accoupler avec la pale de brassage de sorte à l'entrainer en rotation dans la cuve de cuisson. Cet appareil de cuisson comprend en outre un tube de pale, agencé entre une partie centrale de la pale de brassage et la cuve de cuisson pour procurer un guidage à la pale de brassage.

Cependant, ce tube de pale n'est pas monté de manière amovible et/ou réversible par rapport à l'appareil de cuisson et à la cuve de cuisson, et à la pale de brassage, ce qui ne permet pas d'obtenir une cuve à fond plat.

### Exposé de l'invention

Un but de la présente invention est de répondre aux inconvénients de l'art antérieur mentionnés ci-dessus et en particulier, tout d'abord, de proposer un appareil de cuisson qui comprend une cuve de cuisson qui puisse accueillir une tarte ou un gâteau, sans pour autant réduire le volume disponible dans l'espace de cuisson.

Pour cela un premier aspect de l'invention concerne un appareil de cuisson d'aliments, comprenant :
- une cuve de cuisson présentant un fond plat, ou un fond avec une différence de niveau inférieure à 10 mm, agencée pour recevoir des aliments à cuire,
- au moins une pale de brassage agencée pour brasser les aliments à cuire reçus dans la cuve de cuisson,
- des moyens d'entraînement agencés pour s'accoupler avec la pale de brassage de sorte à l'entraîner en rotation dans la cuve de cuisson,
caractérisé en ce que l'appareil de cuisson comprend un tube de pale, monté de manière amovible et/ou réversible par rapport à l'appareil de cuisson et à la cuve de cuisson et à la pale de brassage, agencé au moins entre une partie centrale de la pale de brassage et la cuve de cuisson pour procurer un guidage à la pale de brassage. Le tube de pale prévu dans l'appareil de cuisson permet de reprendre efficacement les efforts ou couples appliqués sur la pale de brassage, si bien que la conception de la cuve de cuisson peut être simplifiée et proposer un fond sans protubérance, puisque les efforts sont repris par le tube de pale et non par la cuve de cuisson.

Avantageusement, le tube de pale est une pièce distincte de la pale de brassage et de la cuve de cuisson.

Avantageusement, le tube de pale est monté sur l'appareil de cuisson selon une liaison du type encastrement bloquant 6 degrés de liberté par rapport à la cuve de cuisson. La liaison entre la cuve de cuisson et le tube de pale est robuste.

Le tube de pale n'est pas monté à demeure vis-à-vis de la pale de brassage, de l'appareil de cuisson, et de la cuve de cuisson. Ainsi, le nettoyage est aisé et le tube de pale ainsi que la pale de brassage peuvent facilement être démontés pour laisser la cuve de cuisson seule dans l'appareil de cuisson, de sorte à permettre la cuisson d'une tarte ou d'un gâteau.

Avantageusement, le tube de pale est monté sur la cuve de cuisson.

Avantageusement, l'appareil de cuisson d'aliments comprend un boîtier recevant les moyens d'entraînement, et le tube de pale est monté sur le boîtier.

Avantageusement, le tube de pale comprend une interface de fixation de type baïonnette de sorte à monter le tube de pale sur la cuve de cuisson selon un mouvement de rotation, avec de préférence :
- la direction de montage du tube de pale est similaire à une direction de rotation de la pale de brassage, si le tube de pale est exempt d'ancrage sur le boîtier (ainsi les efforts appliqués par la pale de brassage sur le tube de pale poussent ce dernier à s'engager encore plus avec la cuve de cuisson),
- la direction de montage du tube de pale est opposée à une direction de rotation de la pale de brassage, si le tube de pale comprend un ancrage sur le boîtier, tel qu'un arrêt en rotation (ainsi les efforts appliqués par la pale de brassage sur la cuve de cuisson poussent cette dernière à s'engager encore plus avec le tube de pale). Un accouplement baïonnette est aisé à manipuler et procure une bonne liaison encastrement, avec verrouillage/déverrouillage par passage d'un point dur, typiquement assuré par une déformation élastique d'une patte ou d'une paroi.

Avantageusement, le tube de pale comprend une interface de fixation de type vissage. Une telle interface de vissage est aisée à utiliser pour le consommateur.

Avantageusement, l'appareil de cuisson d'aliments comprend un écrou de tube, agencé pour se visser sur le tube de pale, en prenant la cuve de cuisson en sandwich entre l'écrou de tube et par exemple un épaulement du tube de pale, et dans lequel l'écrou de tube est agencé pour s'engager avec l'appareil pour procurer un arrêt ou un indexage en rotation. L'écrou de tube cumule les fonctions de fixation et d'index en rotation. Avantageusement, le sens de vissage et le sens de rotation sont opposés, pour éviter tout dévissage intempestif (c'est-à-dire que le couple exercé par la pale de brassage et les aliments brassés sur la cuve de cuisson tend à visser l'écrou de tube).

Avantageusement, l'appareil de cuisson d'aliments comprend des moyens d'étanchéité tels qu'un joint torique, agencés pour procurer une étanchéité entre la cuve de cuisson et les moyens d'entraînement. Un tel joint torique est typiquement agencé entre le tube de pale et une pièce du boîtier, ou entre la cuve de cuisson et le tube de pale ou une pièce du boîtier. On peut prévoir plusieurs joints toriques, à différents endroits de l'assemblage.

Avantageusement, le tube de pale comprend au moins une portion de guidage, formant par exemple un palier, agencée pour reprendre des efforts exercés par la pale de brassage. Un tel palier ménagé sur le tube de pale permet de procurer un guidage et un positionnement efficaces, de sorte à garantir une absence de frottements parasites de la pale de brassage sur la cuve de cuisson. Avantageusement, le palier présente une hauteur inférieure à 20% d'une hauteur totale du tube de pale. Ainsi, la portion de tube de pale qui doit présenter une dimension précise est limitée.

Avantageusement, la portion de guidage, formant par exemple un palier, est agencée à une extrémité supérieure du tube de pale. Cela permet de reprendre efficacement des couples de basculement de la pale de brassage.

Avantageusement, la partie centrale de la pale de brassage traverse le tube de pale, et comprend des moyens d'accouplement avec les moyens d'entraînement.

Avantageusement, les moyens d'accouplement sont agencés à une extrémité inférieure de la partie centrale et forment par exemple une noix d'entraînement.

Avantageusement, l'appareil de cuisson d'aliments comprend des moyens de chauffage.

Avantageusement, les moyens de chauffage comprennent des moyens de ventilation, agencés pour générer un flux d'air chaud sur les aliments à cuire.

Avantageusement, l'appareil de cuisson d'aliments comprend un couvercle amovible, agencé pour fermer un espace de cuisson au-dessus de la cuve de cuisson.

Avantageusement, la cuve de cuisson, et/ou la pale de brassage est amovible.

Avantageusement, l'appareil de cuisson comprend un entraîneur de panier agencé pour se monter dans un orifice central de la cuve de cuisson (par exemple à la place du tube de pale), et qui permet d'entraîner la cuve de cuisson en rotation. Ainsi, il est possible de proposer deux modes de fonctionnement de l'appareil : avec une cuve de cuisson statique, ou avec une cuve de cuisson tournante.

Avantageusement, l'entraîneur de panier présente une surface supérieure s'étendant à un niveau inférieur ou égal à un plan dans lequel s'étend la surface de fond de la cuve de cuisson. En d'autres termes, l'entraîneur de panier est aligné ou affleurant avec le fond de la cuve de cuisson concernée. Ainsi, l'espace de cuisson est optimal et identique entre l'utilisation selon le premier ou le deuxième mode de fonctionnement si c'est la même cuve de cuisson qui passe du premier mode de fonctionnement au deuxième mode de fonctionnement. Il est à noter que la hauteur est prise ici selon la direction verticale lorsque l'appareil repose sur un plan de travail horizontal, et le sommet de l'entraîneur de panier n'est pas positionné plus haut que le fond de la cuve de cuisson.

Avantageusement, l'orifice central de la cuve de cuisson présente un renfoncement ou un lamage dans lequel vient se positionner l'entraineur de panier. Un tel renfoncement ou lamage est aisé à réaliser (typiquement lors d'une opération d'emboutissage).

### Description des figures

D'autres caractéristiques et avantages de la présente invention apparaîtront plus clairement à la lecture de la description détaillée qui suit de modes de réalisations de l'invention donnés à titre d'exemples nullement limitatifs et illustrés par les dessins annexés, dans lesquels :
[Fig. 1] la figure 1 représente une vue en perspective d'un appareil de cuisson selon un premier mode de réalisation de l'invention ;
[Fig. 2] la figure 2 représente un détail en coupe de l'appareil de cuisson de la figure 1, configuré selon un premier mode de fonctionnement ;
[Fig. 3] la figure 3 représente un détail de la coupe de la figure 2 ;
[Fig. 4] la figure 4 représente une vue en perspective de l'appareil de cuisson selon un deuxième mode de fonctionnement de l'invention ;
[Fig. 5] la figure 5 représente un détail en coupe de l'appareil de cuisson selon le deuxième mode de fonctionnement de la figure 4 ;
[Fig. 6] la figure 6 représente une vue d'une alternative de réalisation pour proposer un appareil de cuisson selon le premier mode de fonctionnement;
[Fig. 7] la figure 7 représente l'alternative de réalisation de la figure 6 avec l'appareil de cuisson configuré selon le deuxième mode de fonctionnement ;
[Fig. 8] la figure 8 représente une première vue schématique d'un support de cuve de l'appareil des figures 6 et 7 ;
[Fig. 9] la figure 9 représente une deuxième vue schématique du support de cuve de l'appareil des figures 6 et 7.

### Description détaillée de mode(s) de réalisation

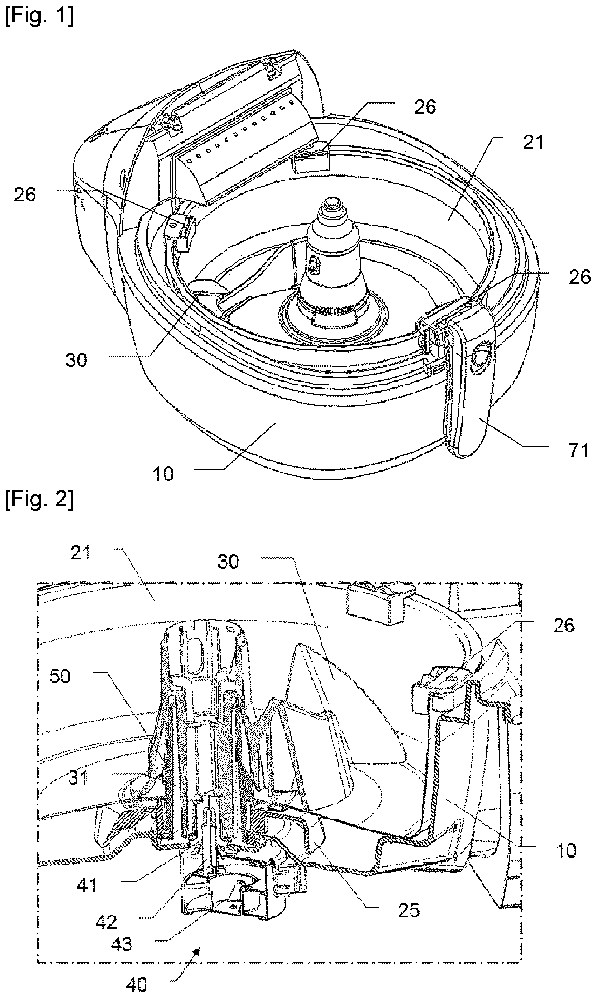

La figure 1 représente un appareil de cuisson d'aliments avec un boîtier 10, pouvant recevoir une cuve de cuisson 21 et équipé d'un couvercle (non représenté) mobile entre une position ouverte et une position fermée, pour définir un espace de cuisson dans lequel se trouve la cuve de cuisson 21.

L'appareil de cuisson est typiquement équipé de moyens de chauffage pour cuire des aliments reçus dans la cuve de cuisson 21. On peut prévoir notamment des moyens de chauffage pour assurer une cuisson par convection, agencés pour établir et entretenir un courant d'air chaud dans l'espace de cuisson, dirigé en particulier sur l'intérieur de la cuve de cuisson 21 et les aliments qui y sont disposés. A cet effet, les moyens de chauffage peuvent comprendre un ventilateur et une ou plusieurs résistance(s) de chauffage.

L'appareil de cuisson est également équipé de moyens de brassage, par exemple une pale de brassage 30, et de moyens d'entraînement 40 agencés pour entraîner la pale de brassage en rotation dans la cuve de cuisson 21.

La figure 2 représente une coupe de l'appareil de cuisson de la figure 1, pour bien montrer la pale de brassage 30, la cuve de cuisson 21 et les moyens d'entraînement 40.

Dans le détail, les moyens d'entraînement 40 comprennent un moteur 43 (un motoréducteur par exemple) avec un arbre d'entraînement 42, sur lequel est montée une noix d'entraînement 41. La pale de brassage 30 comprend une partie centrale 31, qui s'engage avec la noix d'entraînement 41 au travers d'un orifice central de la cuve de cuisson 21, de sorte à pouvoir être entraînée en rotation.

Les moyens d'entraînement 40 sont situés sous la cuve de cuisson 21 et sous une paroi du boîtier 10, si bien que seule la noix d'entraînement 41 est visible lorsque la cuve de cuisson 21 est retirée de l'appareil de cuisson. La cuve de cuisson 21 comprend un socle 25 qui permet de faire reposer la cuve de cuisson 21 sur la paroi du boîtier 10, tout en ayant la noix d'entraînement 41 au même niveau ou quasiment au même niveau que le fond de la cuve de cuisson 21.

Sur la coupe de la figure 2, on remarque aussi que l'appareil de cuisson comprend un tube de pale 50, accouplé ici à la cuve de cuisson 21, et qui est agencé entre la cuve de cuisson 21 et la partie centrale 31 de la pale de brassage 30.

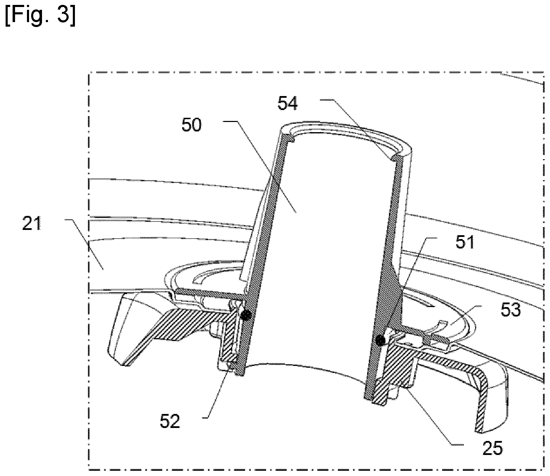

Comme le montre la figure 3, le tube de pale 50 est monté au travers de l'orifice central de la cuve de cuisson 21, grâce à une interface de montage de type baïonnette. On voit par exemple un ergot 52 du tube de pale 50 qui est engagé dans un logement du socle 25. Une telle interface de fixation par baïonnette permet de monter / démonter aisément le tube de pale 50, pour le nettoyer, ou pour ranger la cuve de cuisson.

On pourrait aussi envisager de fixer le tube de pale 50 directement sur le boîtier 10, avec une interface baïonnette ou aussi par vissage ou emboîtement élastique.

Le tube de pale 50 comprend également un épaulement 53 (ou une jupe) qui s'ajuste dans un lamage ou renfoncement de la cuve de cuisson 21, l'épaulement 53 se trouvant au même niveau que le fond de la cuve de cuisson 21. La figure 3 montre aussi un joint torique 51 formant des moyens d'étanchéité entre le tube de pale 50 et le socle 25 de la cuve de cuisson 21.

En extrémité supérieure du tube de pale 50, un retour forme un palier de guidage 54 pour contacter la pale de brassage 30 et reprendre les efforts qui interviennent lors de la rotation de la pale de brassage 30. Le retour présente une hauteur assez faible, pour limiter la zone où les dimensions doivent être assez précises.

En conséquence, une fois le tube de pale 50 et la pale de brassage 30 montés sur l'appareil de cuisson et dans la cuve de cuisson 21, l'appareil de cuisson peut fonctionner selon un premier mode de fonctionnement, avec une cuve de cuisson 21 statique et une pale de brassage 30 qui tourne en rotation dans la cuve de cuisson 21, avec un positionnement précis et robuste, puisque le tube de pale 50, monté en liaison encastrement sur la cuve de cuisson 21, peut reprendre les efforts et guider la pale de brassage 30 (avec le palier de guidage 54 positionné tout en haut du tube de pale, à l'opposé de la noix d'entraînement 41).

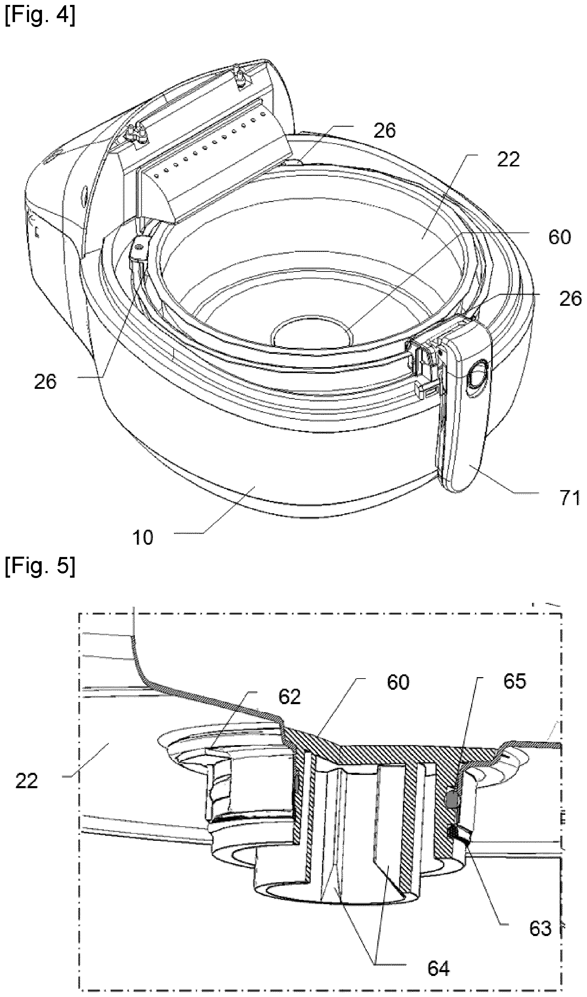

L'appareil de cuisson peut aussi proposer un deuxième mode de fonctionnement avec une cuve de cuisson tournante. A cet effet, la figure 4 représente l'appareil de cuisson d'aliments représenté en figure 1 et muni d'une deuxième cuve de cuisson 22.

La figure 5 représente une coupe d'une deuxième cuve de cuisson 22 comprenant aussi un orifice central, et équipée d'un entraîneur de panier 60 clipsé ou ancré sur la deuxième cuve de cuisson 22 grâce à un jonc élastique 63 qui forme un obstacle au retrait de l'entraîneur de panier 60 en prenant appui sur un bord inférieur de la deuxième cuve de cuisson formant l'orifice central. Alternativement, on peut prévoir un montage par vissage avec un écrou par exemple.

L'entraîneur de panier 60 comprend de plus un doigt 62 (ou un ergot) qui se loge dans une ouverture de la deuxième cuve de cuisson 22, pour procurer un arrêt en rotation entre l'entraîneur de panier 60 et la deuxième cuve de cuisson 22. Un joint torique 65 est positionné entre l'entraîneur de panier 60 et la deuxième cuve de cuisson 22 pour former des moyens d'étanchéité entre l'entraîneur de panier 60 et la deuxième cuve de cuisson 22 (une pâte à gâteau liquide, ou de l'huile ne coulera pas entre l'entraîneur de panier 60 et la deuxième cuve de cuisson 22). L'entraîneur de panier 60 comprend une surface supérieure qui vient se loger dans un renfoncement ou lamage de la deuxième cuve de cuisson 22, si bien que le fond de la deuxième cuve de cuisson 22 est globalement plat et continu, sans aspérité ou protubérance, de sorte qu'un utilisateur peut parfaitement déposer une tarte au fond de la deuxième cuve de cuisson 22.

Enfin, L'entraîneur de panier 60 comprend une pluralité de nervures 64 logées dans un alésage central inférieur, pour venir s'engager avec la noix d'entraînement 41 de l'appareil de cuisson. En conséquence, lorsque l'utilisateur dépose la deuxième cuve de cuisson 22 équipée de l'entraîneur de panier 60 dans la cuve de cuisson 21 (une fois la pale de brassage 30 et le tube de pale 50 démontés), il est possible de proposer une cuve de cuisson rotative (la deuxième cuve de cuisson 22), ayant un fond plat ou au moins sans protubérance au milieu.

En référence aux figures 1 et 2, on note que la cuve de cuisson 21 supporte des roulettes 26 sur son rebord supérieur, qui vont permettre à la deuxième cuve de cuisson 22 de tourner en rotation sans frottement ni déséquilibre, même si les aliments en sont pas disposés de manière égale ou bien répartie dans la deuxième cuve de cuisson 22.

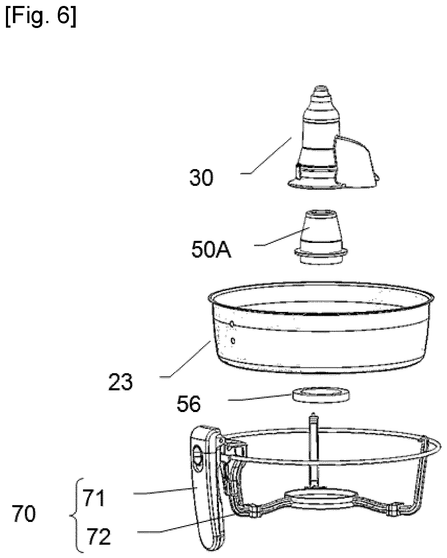

La figure 6 représente une variante de réalisation de l'appareil de cuisson, dans laquelle une même cuve de cuisson peut être montée :
- de manière à être statique pour proposer le premier mode de fonctionnement (cuve de cuisson statique et pale de brassage tournante),
- de manière à être rotative pour proposer le deuxième mode de fonctionnement (cuve de cuisson rotative, sans pale de brassage).

A cet effet, une cuve de cuisson 23 peut recevoir de manière amovible un tube de pale 50A au travers d'un orifice central, sur lequel un écrou de tube 56 peut se visser pour prendre la cuve de cuisson 23 en sandwich. L'écrou de tube 56 est prévu pour pouvoir s'engager avec le boîtier 10 de l'appareil de cuisson pour arrêter la cuve de cuisson 23 en rotation. On pourrait envisager de visser le tube de pale 50A directement dans le boîtier 10.

Un support de cuve 70 est prévu pour recevoir la cuve de cuisson 23 dans l'appareil de cuisson, qui comprend une poignée de préhension 71 articulée autour d'un axe 71B entre une position de repos et une position de manutention, et une structure porteuse 72 qui supporte la cuve de cuisson 23. La pale de brassage 30 est identique à celle du mode de réalisation précédent, et peut venir coiffer le tube de pale 50A.

Selon ce mode de réalisation, l'utilisateur peut donc accoupler le tube de pale 50A sur la cuve de cuisson 23 avec l'écrou de tube 56, afin de créer une liaison encastrement entre les trois pièces. Ensuite, le support de cuve 70 installé dans le boîtier 10, l'utilisateur peut y déposer la cuve de cuisson 23 en engageant l'écrou de tube 56 dans le boîtier 10 de sorte à bloquer toute possibilité de rotation entre le boîtier 10 et la cuve de cuisson 23. Enfin, la pale de brassage 30 peut être posée sur le tube de pale 50A pour s'engager avec la noix d'entraînement 41 des moyens d'entraînement 40, et l'appareil de cuisson est prêt à fonctionner selon le premier mode de fonctionnement : cuve de cuisson 23 statique et pale de brassage 30 tournante.

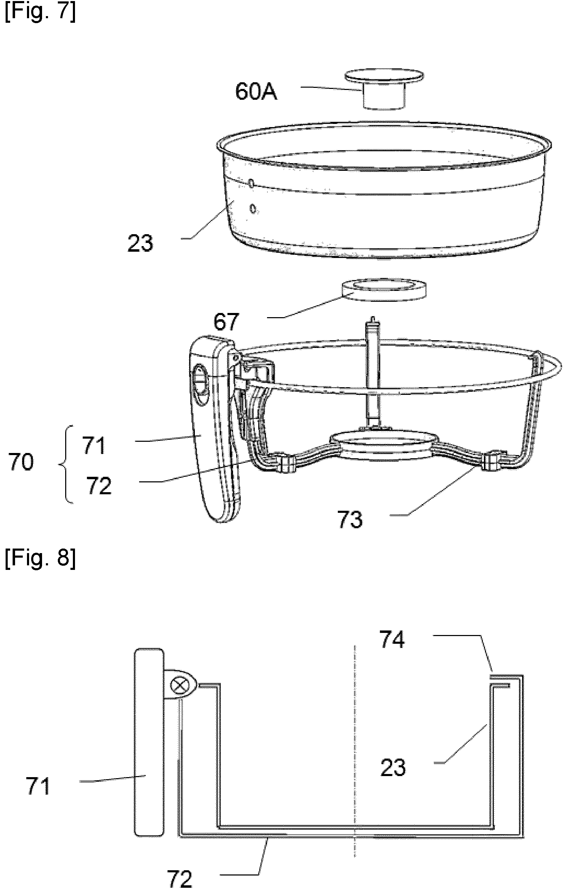

La figure 7 représente la configuration proposée pour assurer le deuxième mode de fonctionnement. La cuve de cuisson 23 (la même que celle de la figure 6) reçoit cette fois un entraîneur de panier 60A qui est également accouplé par vissage sur la cuve de cuisson 23 avec un écrou de panier 67, mais ce dernier ne comprend aucune fonction ni portion d'engagement avec le boîtier 10, si bien qu'il est totalement libre en rotation par rapport au boîtier 10. Alternativement, on peut prévoir une fixation par baïonnette.

En conséquence, une fois le support de cuve 70 placé dans l'appareil de cuisson, l'utilisateur peut y déposer la cuve de cuisson 23 (qui repose sur des roulettes 73 prévue sur la structure porteuse 72, de sorte à pouvoir pivoter aisément), avec l'entraineur de panier 60A qui s'engage avec la noix d'entraînement 41 des moyens d'entraînement 40, et l'appareil de cuisson est prêt à fonctionner selon le deuxième mode de fonctionnement : cuve de cuisson 23 tournante et pas de pale de brassage 30.

De la même manière que précédemment, la cuve de cuisson 23 présente un fond plat, sauf en son centre avec un lamage ou renfoncement ou épaulement, qui reçoit l'entraineur de panier 60A de sorte que ce dernier soit affleurant avec le reste du fond de la cuve de cuisson 23: cette dernière présente ainsi un fond plat, quasiment plat ou au moins sans protubérance centrale. Il est aisé d'y faire cuire une tarte ou un gâteau.

La figure 8 montre schématiquement le support de cuve 70 et la cuve de cuisson 23, avec la poignée de préhension 71 en position de repos. La cuve de cuisson 23 peut être installée dans la structure porteuse 72, en particulier sous des becs de retenue 74 de la structure porteuse 72.

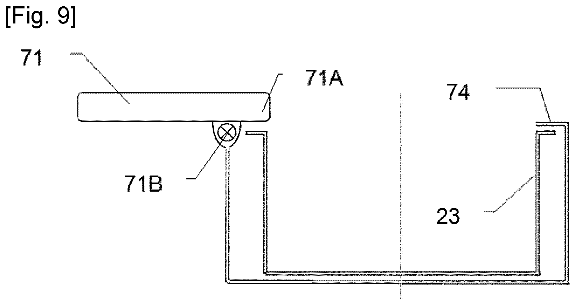

La figure 9 représente la poignée de préhension 71 dans une position de manutention (ou déployée), si bien qu'un rebord 71A de la poignée de préhension 71 vient bloquer la cuve de cuisson 23, déjà engagée sous les becs de retenue 74, ce qui garantit que la cuve de cuisson 23 ne peut pas se détacher de la structure porteuse 72. L'utilisateur peut retirer l'ensemble de l'appareil de cuisson et verser le contenu de la cuve de cuisson 23 en toute sécurité, sans risques de détachement.

Selon les modes de réalisation décrits ci-dessus, on notera notamment que :
- le tube de pale 50 ou 50A est amovible par rapport à la cuve de cuisson 21 ou 23,
- la cuve de cuisson 21, 22 ou 23 comprend un orifice central avec un renfoncement ou un lamage,
- l'entraîneur de panier 60 ou 60A se loge dans le renfoncement ou lamage,
- la cuve de cuisson 21, 22 ou 23 est exempte de protubérance centrale, même avec l'entraîneur de panier 60 ou 60A attaché,
- la cuve de cuisson 21, 22 ou 23 présente un fond plat, ou globalement plat sur un diamètre utile d'au moins 50 % de son diamètre extérieur, de préférence d'au moins 65 % de son diamètre extérieur, et encore plus préférentiellement d'au moins 75 à 80% de son diamètre extérieur. On peut toutefois prévoir une petite pente au niveau du fond de la cuve de cuisson, vers l'intérieur ou vers l'extérieur, ou des différences de niveau, de préférence inférieures à 10 mm.

En conséquence, il est possible de cuire aisément une tarte ou un gâteau dans la cuve de cuisson en utilisant le deuxième mode de fonctionnement (cuve tournante, sans pale de brassage). Une mise en configuration de l'appareil de cuisson pour proposer le premier mode de fonctionnement (cuve de cuisson statique et pale de brassage tournante) est rapide et aisée. La même cuve de cuisson ou deux cuves de cuisson peuvent être prévues pour assurer le passage du premier mode de fonctionnement au deuxième mode de fonctionnement.

On comprendra que diverses modifications et/ou améliorations évidentes pour l'homme du métier peuvent être apportées aux différents modes de réalisation de l'invention décrits dans la présente description sans sortir du cadre de l'invention telle que définie par les revendications ci-jointes.

## Revendications

1. Appareil de cuisson d'aliments, comprenant :
- une cuve de cuisson (21 ; 23) présentant un fond plat, ou un fond avec une différence de niveau inférieure à 10 mm, agencée pour recevoir des aliments à cuire,
- au moins une pale de brassage (30) agencée pour brasser les aliments à cuire reçus dans la cuve de cuisson (21 ; 23),
- des moyens d'entraînement (40) agencés pour s'accoupler avec la pale de brassage (30) de sorte à l'entraîner en rotation dans la cuve de cuisson (21 ; 23),
- un tube de pale (50 ; 50A) monté de manière amovible et/ou réversible par rapport à l'appareil de cuisson et à la cuve de cuisson (21 ; 23), et à la pale de brassage (30), agencé au moins entre une partie centrale (31) de la pale de brassage (30) et la cuve de cuisson (21 ; 23) pour procurer un guidage à la pale de brassage (30).

2. Appareil de cuisson d'aliments selon la revendication 1, dans lequel le tube de pale (50 ; 50A) est monté sur l'appareil de cuisson selon une liaison du type encastrement bloquant 6 degrés de liberté par rapport à la cuve de cuisson (21 ; 23).

3. Appareil de cuisson d'aliments selon l'une des revendications 1 ou 2, dans lequel le tube de pale (50 ; 50A) est monté sur la cuve de cuisson (21 ; 23).

4. Appareil de cuisson d'aliments selon l'une des revendications 1 ou 2, comprenant un boîtier (10) recevant les moyens d'entraînement (40), dans lequel le tube de pale (50 ; 50A) est monté sur le boîtier (10).

5. Appareil de cuisson d'aliments selon l'une des revendications 1 à 4, dans lequel le tube de pale (50 ; 50A) comprend une interface de fixation de type baïonnette.

6. Appareil de cuisson d'aliments selon l'une des revendications 1 à 4, dans lequel le tube de pale (50 ; 50A) comprend une interface de fixation de type vissage.

7. Appareil de cuisson d'aliments selon la revendication 6, dans lequel l'appareil comprend un écrou de tube (56), agencé pour se visser sur le tube de pale (50A), en prenant la cuve de cuisson (21 ; 23) en sandwich entre l'écrou de tube (56) et par exemple un épaulement du tube de pale (50A), et dans lequel l'écrou de tube (56) est agencé pour s'engager avec l'appareil pour procurer un arrêt ou un indexage en rotation.

8. Appareil de cuisson d'aliments selon l'une des revendications 1 à 7, comprenant des moyens d'étanchéité tels qu'un joint torique (51, 65), agencés pour procurer une étanchéité entre la cuve de cuisson (21 ; 23) et les moyens d'entraînement (40).

9. Appareil de cuisson d'aliments selon l'une des revendications 1 à 8, dans lequel le tube de pale (50 ; 50A) comprend au moins une portion de guidage, formant par exemple un palier, agencée pour reprendre des efforts exercés par la pale de brassage (30).

10. Appareil de cuisson d'aliments selon l'une des revendications 1 à 9, dans lequel la partie centrale (31) de la pale de brassage (30) traverse le tube de pale (50 ; 50A), et comprend des moyens d'accouplement avec les moyens d'entraînement (40).

11. Appareil de cuisson d'aliments selon l'une des revendications 1 à 10, comprenant des moyens de chauffage.

12. Appareil de cuisson d'aliments selon la revendication 11, dans lequel les moyens de chauffage comprennent des moyens de ventilation, agencés pour générer un flux d'air chaud sur les aliments à cuire.

13. Appareil de cuisson d'aliments selon l'une des revendications 1 à 12, comprenant un couvercle amovible, agencé pour fermer un espace de cuisson au-dessus de la cuve de cuisson (21 ; 23).

## Patentansprüche

1. Kochgerät für Lebensmittel, umfassend:
- einen Kochtopf (21; 23), der einen flachen Boden oder einen Boden mit einem Höhenunterschied von weniger als 10 mm aufweist, der zum Aufnehmen von zu kochenden Lebensmitteln angeordnet ist,
- mindestens eine Rührschaufel (30), die angeordnet ist, um die in dem Kochtopf (21; 23) aufgenommenen zu kochenden Lebensmittel zu rühren,
- Antriebsmittel (40), die angeordnet sind, um sich mit der Rührschaufel (30) zu koppeln, um diese in dem Kochtopf (21; 23) in Drehung zu versetzen,
- ein Schaufelrohr (50; 50A), das in Bezug auf das Kochgerät und den Kochtopf (21; 23) und die Rührschaufel (30) abnehmbar und/oder umkehrbar montiert ist, das mindestens zwischen einem zentralen Teil (31) der Rührschaufel (30) und dem Kochtopf (21; 23) angeordnet ist, um eine Führung für die Rührschaufel (30) bereitzustellen.

2. Kochgerät für Lebensmittel nach Anspruch 1, wobei das Schaufelrohr (50; 50A) an dem Kochgerät in einer einbettungsartigen Verbindung montiert ist, die 6 Freiheitsgrade in Bezug auf den Kochtopf (21; 23) blockiert.

3. Kochgerät für Lebensmittel nach einem der Ansprüche 1 oder 2, wobei das Schaufelrohr (50; 50A) auf dem Kochtopf (21; 23) montiert ist.

4. Kochgerät für Lebensmittel nach einem der Ansprüche 1 oder 2, umfassend ein Gehäuse (10), welches die Antriebsmittel (40) aufnimmt, wobei das Schaufelrohr (50; 50A) auf dem Gehäuse (10) montiert ist.

5. Kochgerät für Lebensmittel nach einem der Ansprüche 1 bis 4, wobei das Schaufelrohr (50; 50A) eine bajonettartige Befestigungsschnittstelle umfasst.

6. Kochgerät für Lebensmittel nach einem der Ansprüche 1 bis 4, wobei das Schaufelrohr (50; 50A) eine schraubenartige Befestigungsschnittstelle umfasst.

7. Kochgerät für Lebensmittel nach Anspruch 6, wobei das Gerät eine Rohrmutter (56) umfasst, die angeordnet ist, um auf das Schaufelrohr (50A) geschraubt zu werden, indem der Kochtopf (21; 23) zwischen der Rohrmutter (56) und beispielsweise einer Schulter des Schaufelrohrs (50A) sandwichartig aufgenommen wird, und wobei die Rohrmutter (56) angeordnet ist, um mit dem Gerät in Eingriff zu kommen, um einen Drehstopp oder eine -indexierung bereitzustellen.

8. Kochgerät für Lebensmittel nach einem der Ansprüche 1 bis 7, umfassend Dichtungsmittel wie einen O-Ring (51, 65), die angeordnet sind, um eine Abdichtung zwischen dem Kochtopf (21; 23) und den Antriebsmitteln (40) bereitzustellen.

9. Kochgerät für Lebensmittel nach einem der Ansprüche 1 bis 8, wobei das Schaufelrohr (50; 50A) mindestens einen Führungsabschnitt umfasst, der beispielsweise ein Lager bildet, der so angeordnet ist, dass er Kräfte, die von der Rührschaufel (30) ausgeübt werden, aufnimmt.

10. Kochgerät für Lebensmittel nach einem der Ansprüche 1 bis 9, wobei der zentrale Teil (31) der Rührschaufel (30) durch das Schaufelrohr (50; 50A) verläuft und Mittel zur Kopplung mit den Antriebsmitteln (40) umfasst.

11. Kochgerät für Lebensmittel nach einem der Ansprüche 1 bis 10, umfassend Heizmittel.

12. Kochgerät für Lebensmittel nach Anspruch 11, wobei die Heizmittel Belüftungsmittel umfassen, die angeordnet sind, um einen Heißluftstrom über die zu kochenden Lebensmittel zu erzeugen.

13. Kochgerät für Lebensmittel nach einem der Ansprüche 1 bis 12, umfassend einen abnehmbaren Deckel, der angeordnet ist, um einen Kochraum über dem Kochtopf (21; 23) zu verschließen.

## Claims

1. Appliance for cooking food, comprising:
- a cooking vessel (21; 23) having a flat bottom, or a bottom with a difference in level less than 10mm, arranged to receive food to be cooked,
- at least one stirring paddle (30) arranged to stir the food to be cooked received in the cooking vessel (21; 23),
- drive means (40) arranged to be coupled with the mixing paddle (30) so as to rotate it in the cooking vessel (21; 23),
- a paddle tube (50; 50A) removably mounted and/or reversible with respect to the cooking appliance and to the cooking vessel (21; 23), and to the stirring paddle (30), arranged at least between a central part (31) of the stirring paddle (30) and the cooking vessel (21; 23) to provide a guiding to the stirring paddle (30).

2. Appliance for cooking food according to claim 1, wherein the paddle tube (50; 50A) is mounted on the cooking appliance according to a connection of the recess type blocking 6 degrees of freedom with respect to the cooking vessel (21; 23).

3. Appliance for cooking food according to any one of claims 1 or 2, wherein the paddle tube (50; 50A) is mounted on the cooking vessel (21; 23).

4. Appliance for cooking food according to any one of claims 1 or 2, comprising a casing (10) receiving the driving means (40), in which the paddle tube (50; 50A) is mounted on the casing (10).

5. Appliance for cooking food according to any one of claims 1 to 4, wherein the paddle tube (50; 50A) comprises a bayonet-type fixing interface.

6. Appliance for cooking food according to any one of claims 1 to 4, wherein the paddle tube (50; 50A) comprises a screwing-type fixing interface.

7. Appliance for cooking food according to claim 6, wherein the appliance comprises a tube nut (56), arranged to be screwed on the paddle tube (50A), by sandwiching the cooking vessel (21; 23) between the tube nut (56) and, for example, a shoulder of the paddle tube (50A), and wherein the tube nut (56) is arranged to be engaged with the appliance to provide a stop or a rotating indexing.

8. Appliance for cooking food according to any one of claims 1 to 7, comprising sealing means such as an O-ring (51, 65), arranged to provide a seal between the cooking vessel (21; 23) and the drive means (40).

9. Appliance for cooking food according to any one of claims 1 to 8, wherein the paddle tube (50; 50A) comprises at least one guiding portion, forming, for example, a bearing, arranged to take on forces exerted by the stirring paddle (30).

10. Appliance for cooking food according to any one of claims 1 to 9, wherein the central part (31) of the stirring paddle (30) passes through the paddle tube (50; 50A), and comprises means for coupling with the drive means (40).

11. Appliance for cooking food according to any one of claims 1 to 10, comprising heating means.

12. Appliance for cooking food according to claim 11, wherein the heating means comprise ventilation means, arranged to generate a hot air flow on the food to be cooked.

13. Appliance for cooking food according to any one of claims 1 to 12, comprising a removable cover, arranged to close a cooking space above the cooking vessel (21; 23).
